# EUROPEAN PATENT APPLICATION

(11) **EP 3 854 769 A1**
(43) Date of publication of application: **28.07.2021**
(21) Application number: 20153059.9
(22) Date of filing: 22.01.2020
(51) Int. Cl.: C04B 40/06, F16B 13/14, C04B 28/06

(54) **ALKALI-ACTIVATION OF AN INORGANIC MORTAR SYSTEM BASED ON BLOCKED ALUMINOUS CEMENT AND USE THEREOF**

(71) Applicant: Hilti Aktiengesellschaft, 9494 Schaan (LI)
(72) Inventor: SCHÖNLEIN, Markus, 82205 Gilching (DE); NIKIFOROVA, Natalja, 86862 Lamerdingen (DE)
(74) Representative: Hilti Aktiengesellschaft Corporate Intellectual Property

(57) **Abstract**

The present invention pertains to a two-component mortar system for chemical fastening of anchoring means in mineral substrates, comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid, phosphonic acids, salts and mixtures thereof, at least one plasticizer and water, and component B comprising an initiator including an silicate-based activator component and accelerator component, at least one retarder, at least one mineral filler and water. Moreover, the present invention pertains to a two-component system, which is ready-for-use, for chemical fastening of anchoring means, preferably of metal elements, in mineral substrates, such as structures made of brickwork, concrete, pervious concrete or natural stone as well as its use for chemical fastening of anchoring means.

## Description

### FIELD OF THE INVENTION

The present invention pertains to a two-component mortar system for chemical fastening of anchoring means in mineral substrates, comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid, phosphonic acids, salts and mixtures thereof, at least one plasticizer and water, and component B comprising an initiator including an silicate-based activator component and accelerator component, at least one retarder, at least one mineral filler and water. Moreover, the present invention pertains to a two-component system, which is ready-for-use, for chemical fastening of anchoring means, preferably of metal elements, in mineral substrates, such as structures made of brickwork, concrete, pervious concrete or natural stone as well as its use for chemical fastening of anchoring means.

### BACKGROUND OF THE INVENTION

Many two-component mortar systems, which are sometimes also referred to as kit-of-parts, exist, in which each of the components is intended to be mixed prior to use or during application in order to initiate the curing process to provide good chemical fastening of anchoring means in mineral surfaces. For example, organic systems based on free-radically polymerizable resins are used when fast curing is desired. However, such systems are generally known to be polluting, expensive, potentially hazardous and/or toxic for the environment and for the person who handles them and they often need to be specifically labelled. Moreover, organic systems often show a much reduced stability when thermally exposed to strong sunlight or otherwise elevated temperatures thereby decreasing their mechanical performance when it comes to a chemical fastening of anchoring means.

In order to overcome these drawbacks, predominantly mineral systems based on aluminous cement have been developed. Aluminous cement has as its major constituent monocalcium aluminate and is widely used in the building and construction industries as the final products evidence a high level of mechanical performance over extended periods of time. Also, aluminous cement is more resistant to acids and attains its maximum strength more rapidly than Portland cement and is capable of withstanding solutions of sulfates. Hence, aluminous cement systems are preferably employed in the field of chemical anchoring.

EP 2 162 410 describes a ready-for-use dual-component system including a part A based on an aqueous-phase aluminous cement, and a part B for initiating the curing process. The initiator in part B is made of only lithium salts. The system cures in less than 5 minutes after mixing of the two parts. EP 0 081 385 also discloses a dual-component system including a set-inhibited aqueous high alumina cement composition and a reactivator composition including lithium salts.

However, these aluminous cement aqueous suspensions comprising rare and expensive earth metals salts as activators are considered as critical in times of climate change and in view of the circumstances they are mined. In view of the above and in order to address the ecologically and economic aspects when producing such composition, reduction of rare alkali-metals, such as lithium, should be considered.

Therefore, there is a need for a ready-for-use multiple-component system, preferably a two-component system, which is superior over the prior art systems with regard to environmental aspects, health and safety, handling, storage time and a good balance between setting and hardening of the mortar. Moreover, it is of interest to provide a system that can be used for chemical fastening of anchoring means in mineral substrates without adversely affecting the handling, characteristics and the mechanical performance of the chemical anchoring system. In particular, there is a need for an alternative system that addresses positively all economic, ecologically and toxically factors, specifically in view of the climate change and limited earth resources.

In view of the above, it is an object of the present invention to provide a multiple-component system, in particular a two-component mortar system, which overcomes the disadvantages of the prior art systems and addresses the above.

Moreover, it is an object of the present invention to provide a two-component mortar system that can be used for chemical fastening of anchoring means, preferably of metal elements, in mineral substrates, such as structures made of brickwork, concrete, pervious concrete or natural stone.

These and other objectives as they will become apparent from the ensuring description of the invention are solved by the present invention as described in the independent claims. The dependent claims pertain to preferred embodiments.

### SUMMARY OF THE INVENTION

In one aspect, the present invention provides a ready-for-use two-component mortar system comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid, phosphonic acids, salts and mixtures thereof, at least one plasticizer and water, and component B comprising an initiator including an activator component and accelerator component, at least one retarder, at least one mineral filler and water, wherein the accelerator component comprises at least one alkali or alkaline earth metal salt, wherein the at least one retarder is selected from the group consisting of citric acid, tartaric acid, lactic acid, salicylic acid, gluconic acid, lignosulfonates, cellulose derivatives, organophosphates or synthetic polymers, maleic anhydride and mixtures thereof, and wherein the at least one mineral filler is selected from the group consisting of limestone fillers, sand, corundum, dolomite, alkaline-resistant glass, crushed stones, gravels, pebbles and mixtures thereof, wherein the activator component comprises sodium silicate, potassium silicate, lithium silicate, modifications or mixtures thereof.

In another aspect, the present invention provides a two-component mortar system that is used for chemical fastening of anchoring means, preferably of metal elements, in mineral substrates, such as structures made of brickwork, concrete, pervious concrete or natural stone.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "aluminous cement" in the context of the present invention refers to a calcium aluminate cement that consists predominantly of hydraulic active calcium aluminates. Alternative names are "high-alumina cement" or "Ciment fondu" in French. The main active constituent of calcium aluminate cements is monocalcium aluminate (CaAl₂O₄, CaO·Al₂O₃, or CA in the cement chemist notation).

The term "shelf life" in the context of the present invention refers to the time during which a component stays in the form of a more or less fluid aqueous suspension of solid products, capable of coming back to the aqueous-suspension by mechanical means, without setting or losing its reactivity.

The term "initiator" in the context of the present invention refers to a compound or composition that modifies the chemical environment to start a particular chemical reaction. In the present invention the initiator modifies the pH-value of the mortar suspension thereby de-blocking the hydraulic binder in the final mixture. In particular, the term "initiator" refers to a component including a silicate-based activator component and an accelerator component.

The term "retarder" in the context of the present invention refers to a compound or composition that modifies the chemical environment to delay a particular chemical reaction. In the present invention the retarder modifies the hydration ability of the calcium aluminate cement of the mortar suspension thereby delaying the hydraulic binder action in the final mixture.

The present invention pertains to a two-component mortar system comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid, phosphonic acids, salts and mixtures thereof, at least one plasticizer and water, and component B comprising an initiator including an activator component and accelerator component, at least one retarder, at least one mineral filler and water, wherein the accelerator component comprises at least one alkali or alkaline earth metal salt, wherein the at least one retarder is selected from the group consisting of citric acid, tartaric acid, lactic acid, salicylic acid, gluconic acid, lignosulfonates, cellulose derivatives, organophosphates or synthetic polymers, maleic anhydride and mixtures thereof, and wherein the at least one mineral filler is selected from the group consisting of limestone fillers, sand, corundum, dolomite, alkaline-resistant glass, crushed stones, gravels, pebbles and mixtures thereof, characterized in that the activator component comprises sodium silicate, potassium silicate, lithium silicate, modifications or mixtures thereof.

It has been found that if the activator component comprises sodium silicate, potassium silicate, lithium silicate, modifications or mixtures thereof, activation of a blocked aqueous-phase aluminous cement (CA) or an aqueous-phase calcium sulfoaluminate cement (CSA) can be achieved resulting in good load values of the final hardened system thereby addressing all economic, ecologically and toxically factors, specifically in view of the climate change and limited earth resources. This solution represents an alternative for existing solutions as outlined.

Component A according to the present invention is based on an aqueous-phase aluminous cement (CA) or an aqueous-phase calcium sulfoaluminate cement (CSA). The calcium aluminate cement which can be used in the present invention is characterized by rapid set and rapid hardening, rapid drying and shrinkage compensation when mixed with calcium sulfates, excellent resistance to corrosion and shrinkage. Such a calcium aluminate cement suitable to be used in the present invention is for example Ternal® White (Kerneos, France).

Component A of the present invention comprises at least about 40 wt.-%, preferably at least about 50 wt.-%, more preferably at least about 60 wt.-%, most preferably at least about 65 wt.-%, from about 40 wt.-% to about 95 wt.-%, preferably from about 50 wt.-% to about 90 wt.-%, more preferably from about 60 wt.-% to about 95 wt.-%, most preferably from about 70 wt.-% to about 80 wt.-% of aluminous cement, based on the total weight of component A.

According to an alternative embodiment of the invention, component A comprises at least about 20 wt.-%, preferably at least about 30 wt.-%, more preferably at least about 40 wt.-%, most preferably at least about 50 wt.-%, from about 20 wt.-% to about 80 wt.-%, preferably from about 30 wt.-% to about 70 wt.-%, more preferably from about 35 wt.-% to about 60 wt.-%, most preferably from about 40 wt.-% to about 55 wt.-% of aluminous cement, based on the total weight of component A and at least about 0.1 wt.-%, preferably at least about 1 wt.-%, more preferably at least about 1.5 wt.-%, most preferably at least about 2 wt.-%, from about 0.1 wt.-% to about 50 wt.-%, preferably from about 0.5 wt.-% to about 40 wt.-%, more preferably from about 1 wt.-% to about 30 wt.-%, most preferably from about 15 wt.-% to about 25 wt.-% of calcium sulfate, preferably calcium sulfate hemihydrate, based on the total weight of component A. In a preferred alternative embodiment of the two-component mortar system of the present invention, the ratio of CaSO₄/CAC of component A should be less or equal to 5:95.

The blocking agent comprised in component A according to the present invention is selected from the group consisting of boric acid, phosphoric acid, metaphosphoric acid, phosphorous acid, phosphonic acids, salts and mixtures thereof, preferably is phosphoric acid or metaphosphoric acid, most preferably is phosphoric acid, in particular an 85% aqueous solution of phosphoric acid. Component A comprises at least about 0.1 wt.-%, preferably at least about 0.3 wt.-%, more preferably at least about 0.4 wt.-%, most preferably at least about 0.5 wt.-%, from about 0.1 wt.-% to about 20 wt.-%, preferably from about 0.1 wt.-% to about 15 wt.-%, more preferably from about 0.1 wt.-% to about 10 wt.-%, most preferably from about 0.3 wt.-% to about 10 wt.-% of said blocking agent, based on the total weight of component A. In a preferred embodiment, component A comprises from about 0.3 wt.-% to about 10 wt.-% of 85% aqueous solution of phosphoric acid, based on the total weight of component A. Preferably, the amounts of aluminous cement and/or calcium sulfoaluminate cement by weight relative to the hydraulic bindertotal weight are higher than any of the following values: 50%, 60%, 70%, 80%, 90%, 95%, 99% or are 100%.

The plasticizer comprised in component A according to the present invention is selected from the group consisting of low molecular weight (LMW) polyacrylic acid polymers, superplasticizers from the family of polycondensates, superplasticizers from the family of polyphosphonate polyox and polycarbonate polyox, and superplasticizers from the polycarboxylate ether group, and mixtures thereof, for example Ethacryl™ G (Coatex, Arkema Group, France), Acumer™ 1051 (Rohm and Haas, U.K.), or Sika® ViscoCrete®-20 HE (Sika, Germany). Suitable plasticizers are commercially available products. Component A comprises at least about 0.01 wt.-%, preferably at least about 0.1 wt.-%, more preferably at least about 0.2 wt.-%, most preferably at least about 0.3 wt.-%, from about 0.01 wt.-% to about 20 wt.-%, preferably from about 0.1 wt.-% to about 15 wt.-%, more preferably from about 0.2 wt.-% to about 10 wt.-%, most preferably from about 0.3 wt.-% to about 5 wt.-% of said plasticizer, based on the total weight of component A.

In an advantageous embodiment, component A further comprises the following characteristics, taken alone or in combination.

Component A may additionally comprise a thickening agent. The thickening agents which can be used in the present invention may be selected from the group consisting of organic products, such as xanthan gum, welan gum or DIUTAN® gum (CPKelko, USA), starched-derived ethers, guar-derived ethers, cellulose ethers, polyacrylamide, carrageenan, agar agar, and mineral products, such as clay, and their mixtures. Suitable thickening agents are commercially available products. Component A comprises at least about 0.01 wt.-%, preferably at least about 0.1 wt.-%, more preferably at least about 0.15 wt.-%, most preferably at least about 0.2 wt.-%, from about 0.01 wt.-% to about 10 wt.-%, preferably from about 0.1 wt.-% to about 5 wt.-%, more preferably from about 0.2 wt.-% to about 1 wt.-%, most preferably from about 0.25 wt.-% to about 0.7 wt.-% of said thickening agent, based on the total weight of component A.

Component A may further comprise an antibacterial or biocidal agent. The antibacterial or biocidal agents which can be used in the present invention may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands). Component A comprises at least about 0.001 wt.-%, preferably at least about 0.002 wt.-%, more preferably at least about 0.005 wt.-%, most preferably at least about 0.01 wt.-%, from about 0.001 wt.-% to about 1.5 wt.-%, preferably from about 0.002 wt.-% to about 0.1 wt.-%, more preferably from about 0.005 wt.-% to about 0.075 wt.-%, most preferably from about 0.01 wt.-% to about 0.03 wt.-% of said antibacterial or biocidal agent, based on the total weight of component A. In a preferred embodiment, component A comprises from about 0.01 wt.-% to about 0.03 wt.-% of Nuosept OB 03, based on the total weight of component A.

In an alternative embodiment, component A may comprise at least one filler, in particular an organic or mineral filler. The filler which can be used in the present invention may be selected from the group consisting of quartz powder, preferably quartz powder having an averaged grain size (d50%) of about 16 µm, quartz sand, clay, fly ash, fumed silica, carbonate compounds, corundum, pigments, titanium oxides, light fillers, and their mixtures. Suitable mineral fillers are commercially available products. Exemplarily mentioned is quartz powder Millisil W12 or W6 (Quarzwerke GmbH, Germany). Component A comprises at least about 1 wt.-%, preferably at least about 2 wt.-%, more preferably at least about 5 wt.-%, most preferably at least about 8 wt.-%, from about 1 wt.-% to about 50 wt.-%, preferably from about 2 wt.-% to about 40 wt.-%, more preferably from about 5 wt.-% to about 30 wt.-%, most preferably from about 8 wt.-% to about 20 wt.-% of said at least one filler, based on the total weight of component A.

The water content comprised in component A is at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of component A.

The presence of a plasticizer, thickening agent as well as an antibacterial or biocidal agent does not change the overall inorganic nature of the cementitious component A.

Component A comprising the aluminous cement or calcium sulfoaluminate cement is present in aqueous-phase, preferably in form of a slurry or paste.

Component B of the present invention comprises an initiator including a silicate-based activator component and accelerator component, at least one retarder, at least one mineral filler and water.

In particular, the silicate-based activator component comprises sodium silicate, potassium silicate, lithium silicate, modifications or mixtures thereof, preferably the activator component is a sodium silicate, such as sodium metasilicate, sodium orthosilicate or sodium pyrosilicate, more preferably is a sodium or potassium silicate. In one preferred embodiment the potassium silicate used in component B is an aqueous solution of potassium silicate, sodium silicate or modifications thereof. In a preferred embodiment of the present invention, the silicate-based activator-component comprises 1 to 50 wt.-% of silicate, preferably 10 to 40 wt.-%, most preferably 15 to 30 wt.-%, based on the total weight of the aqueous alkali silicate.

Component B comprises at least about 0.01 wt.-%, preferably at least about 0.02 wt.-%, more preferably at least about 0.05 wt.-%, most preferably at least about 1 wt.-%, from about 0.01 wt.-% to about 40 wt.-%, preferably from about 0.02 wt.-% to about 35 wt.-%, more preferably from about 0.05 wt.-% to about 30 wt.-%, most preferably from about 1 wt.-% to about 25 wt.-% of said silicate-based activator component, based on the total weight of component B. In a particular preferred embodiment, the activator is comprised of water and potassium silicate or of water and sodium silicate.

The accelerator component is constituted of at least one alkali and/or earth alkaline metal salt selected from the group consisting of hydroxides, chlorides, sulfates, phosphates, monohydrogen phosphates, dihydrogen phosphates, nitrates, carbonates and mixtures thereof, preferably the accelerator component is an alkali or earth alkaline metal salt, still preferably is a water-soluble alkali or earth alkaline metal salt, more preferably is a calcium metal salt, such as calcium hydroxide, calcium sulfate, calcium carbonate, calcium nitrate, calcium chloride, calcium formate or calcium phosphate, a sodium metal salt, such as sodium hydroxide, sodium sulfate, sodium carbonate, sodium chloride, sodium nitrate, sodium formate or sodium phosphate, or a lithium metal salt, such as lithium hydroxide, lithium sulfate, lithium sulfate monohydrate, lithium carbonate, lithium nitrate, lithium chloride, lithium formate or lithium phosphate, most preferably is lithium sulfate or lithium sulfate monohydrate. Component B comprises at least about 0.01 wt.-%, preferably at least about 0.05 wt.-%, more preferably at least about 0.1 wt.-%, most preferably at least about 0.2 wt.-%, from about 0.01 wt.-% to about 25 wt.-%, preferably from about 0.05 wt.-% to about 20 wt.-%, more preferably from about 0.2 wt.-% to about 15 wt.-%, most preferably from about 1.0 wt.-% to about 10 wt.-% of said accelerator, based on the total weight of component B.

The at least one retarder comprised in component B according to the present invention is selected from the group consisting of citric acid, tartaric acid, lactic acid, salicylic acid, gluconic acid, lignosulfonates, cellulose derivatives, organophosphates or synthetic polymers, maleic anhydride and mixtures thereof, preferably is a mixture of citric acid and tartaric acid. Component B comprises at least about 0.1 wt.-%, preferably at least about 0.2 wt.-%, more preferably at least about 0.5 wt.-%, most preferably at least about 1.0 wt.-%, from about 0.1 wt.-% to about 25 wt.-%, preferably from about 0.2 wt.-% to about 15 wt.-%, more preferably from about 0.5 wt.-% to about 15 wt.-%, most preferably from about 1.0 wt.-% to about 10 wt.-% of said retarder, based on the total weight of component B.

In a particular preferred embodiment of component B of the present invention, the ratio of citric acid/tartaric acid is 1.6/1.

The at least one mineral filler comprised in component B according to the present invention is selected from the group consisting of limestone fillers, sand, crushed stones, gravels, pebbles, corundum and mixtures thereof, preferred are limestone fillers, such as various calcium carbonates. The at least one mineral filler is preferably selected from the group consisting of corundum, limestone fillers or quartz fillers, such as quartz powder Millisil W12 or W6 (Quarzwerke GmbH, Germany) and quartz sand. The at least one mineral filler of component B is most preferably a calcium carbonate or a mixture of calcium carbonates. Component B comprises at least about 30 wt.-%, preferably at least about 40 wt.-%, more preferably at least about 50 wt.-%, still more preferably at least about 60 wt.-%, most preferably at least about 70 wt.-%, from about 30 wt.-% to about 95 wt.-%, preferably from about 35 wt.-% to about 90 wt.-%, more preferably from about 40 wt.-% to about 85 wt.-%, still more preferably from about 45 wt.-% to about 80 wt.-%, most preferably from about 50 wt.-% to about 75 wt.-% of at least one mineral filler, based on the total weight of component B.

In a particular preferred embodiment of the present invention, the at least one mineral filler comprised in component B is mixture of different corundums, such as special fused alumina, a fine calcium carbonate and optionally quartz sand.

In a particular preferred alternative embodiment of the present invention, the at least one mineral filler comprised in component B is a mixture of four different calcium carbonates, i.e. calcium carbonate fines, such as different Omyacarb® types (Omya International AG, Germany).

In a particular preferred alternative embodiment of the present invention, the at least one mineral filler comprised in component B is mixture of three different quartz fillers. Most preferably, the first quartz filler is a quartz sand having an average particle size (d50%) of about 240 µm. The second quartz filler is a quartz powder having an average grain size (d50%) of about 40 µm. The third quartz filler is a quartz powder having an average grain size (d50%) of about 15 µm. In a particular preferred embodiment of component B of the present invention, the ratio of first quartz filler/second quartz filler/third quartz filler is 3/2/1.

In an advantageous embodiment, component B further comprises the following characteristics, taken alone or in combination.

Component B may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Acrysol ASE-60 (The Dow Chemical Company). Component B comprises at least about 0.01 wt.-%, preferably at least about 0.05 wt.-%, more preferably at least about 0.1 wt.-%, most preferably at least about 0.3 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.3 wt.-% to about 1 wt.-% of said thickening agent, based on the total weight of component B.

The presence of a retarder and thickening agent does not change the overall inorganic nature of the cementitious component B.

Component B comprising the initiator including a silicate-based activator component and accelerator component and retarder is present in aqueous-phase, preferably in form of a slurry or paste.

It is preferred that the pH-value of component B is above 10, more preferably above 11 and most preferably is above 12, in particular in the range between 10 and 14, preferably between 11 and 13.

Moreover, it is particular preferred that the proportion of retarder in component B is chosen so that the citric acid/tartaric acid to aluminous cement ratio and citric acid/tartaric acid to calcium sulfoaluminate cement, in the product obtained by mixing components A and B is lower than 0.5, preferably between 0.01 and 0.4, most preferably between 0.1 and 0.3.

In a most preferred embodiment, component A comprises or consists of the following components:
70 to 80 wt.-% of aluminous cement, alternatively 40 to 60 wt.-% aluminous cement and
15 to 25 wt.-% calcium sulfate,
0.5 to 1.5 wt.-% of phosphoric acid,
0.5 to 1.5 wt.-% of plasticizer,
0.001 to 0.05 wt.-% of an antimicrobial or biocidal agent,
optionally 5 to 20 wt.-% of mineral fillers, and
15 to 25 wt.-% of water.

In a preferred embodiment, component B comprises or consists of the following components:
0.1 wt.-% to 15 wt.-% of silicate-based activator component,
0.1 wt.-% to 5 wt.-% of lithium sulfate or lithium sulfate monohydrate,
0.05 wt.-% to 5 wt.-% of citric acid,
0.05 wt.-% to 4 wt.-% of tartaric acid,
30 wt.-% to 45 wt.-% of a first mineral filler,
15 wt.-% to 25 wt.-% of a second mineral filler,
5 wt.-% to 20 wt.-% of a third mineral filler,
5 wt.-% to 15 wt.-% of a fourth mineral filler,
0.01 wt.-% to 0.5 wt.-% of a thickening agent, and
15 wt.-% to 25 wt.-% of water.

Component A of the present invention may be prepared as follows: The phosphor-containing blocking agent is mixed with water, so that the pH-value of the resulting mixture is about 2. Plasticizer is added and the mixture homogenized. Aluminous cement, optionally calcium sulfate, and optionally mineral filler are premixed and added stepwise to the mixture whilst increasing the stirring speed, so that the pH-value of the resulting mixture is about 4. Finally, thickening agent and antibacterial/biocidal agent are added and mixed until complete homogenization of the mixture.

Component B of the present invention may be prepared as follows: The accelerator is dissolved in an aqueous solution of an activator, followed by subsequent addition of retarder and homogenization of the mixture. The filler(s) is/are added stepwise whilst increasing the stirring speed until the mixture homogenizes. Finally, the thickening agent is added until complete homogenization of the mixture.

Component A and B are present in aqueous phase, preferably in form of a slurry or paste. In particular, components A and B have a pasty to fluid aspect according to their respective compositions. In one preferred embodiment, component A and component B are in paste form thereby preventing sagging at the time of mixing the two components.

The weight ratio between component A and component B (A/B) is preferentially comprised between 7/1 and 1/3, preferably is 3/1. Preferably, the composition of the mixture comprises 75 wt.-% of component A and 25 wt.-% of component B. In an alternative embodiment, the composition of the mixture comprises 25 wt.-% of component A and 75 wt.-% of component B.

The two-component system is of mineral nature, which is not affected by the presences of additional thickening agents or other agents.

It is preferred that the two-component mortar system has an initial set-time of at least 5 min, preferably of at least 10 min, more preferably of at least 15 min, most preferably of at least 20 min, in particular in the range of from about 5 to 25 min, preferably in the range of about 10 to 20 min, after mixing of the two components A and B.

In the multi-component mortar system, especially two-component mortar system, the volume ratio of cementitious component A to initiator component B is 1:1 to 7:1, preferably is 3:1. In an alternative embodiment, the volume ratio of cementitious component A to initiator component B is 1:3 to 1:2.

After being produced separately, component A and component B are introduced into separate containers, from which they are ejected by means of mechanical devices and are guided through a mixing device. The two-component mortar system of the present invention is preferably a ready-for-use system, whereby component A and B are separately arranged from each other in a multi-chamber device, such as a multi-chamber cartridge and/or a multi-chamber cylinder or in two-component capsules, preferably in a two-chamber cartridge or in two-component capsules. The multi-chamber system preferably includes two or more foil bags for separating curable component A and initiator component B. The contents of the chambers or bags which are mixed together by a mixing device, preferably via a static mixer, can be injected into a borehole. The assembly in multiple chamber cartridges or pails or sets of buckets is also possible.

The hardening aluminous cement composition existing from the static mixer is inserted directly into the borehole, which is required accordingly for fastening the anchoring means, and has been initially introduced into the mineral substrate, during the chemical fastening of anchoring means, whereupon the construction element to be fastened, for example an anchor rod, is inserted and adjusted, whereupon the mortar composition sets and hardens. In particular, the two-component system of the present invention is to be considered as a chemical anchor for fastening metal elements.

The role of mineral fillers, in particular in component B, is to adjust the final performance with regard to mechanical strength and performance as well as long term durability. By optimizing the fillers, it is possible to optimize the water/aluminous cement ratio which allows for an efficient and fast hydration of the aluminous cement.

The two-component mortar system of the present invention can be used for a chemical fastening of anchoring means, preferably of metal elements, such as anchor rods, in particular threaded rods, bolts, steel reinforcement bars or the like into mineral substrate, such as structures made of brickwork, concrete, pervious concrete or natural stone. In particular, the two-component mortar system of the present invention can be used for chemical fastening of anchoring means, such as metal elements, in boreholes. It can be used for anchoring purposes encompassing a good load capacity.

Moreover, the two-component mortar system of the present invention may be used for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements. However, in particular it is used for fastening of anchoring means, preferably metal elements, such as anchor rods, in particular threaded rods, bolts, steel reinforcement bars or the like into recesses, such as boreholes, in mineral substrates, such as structures made of brickwork, concrete, pervious concrete or natural stone, whereby the components of the two-component mortar system of the present invention are prior mixed, for example by means of a static mixer or by destroying a cartridge or a plastic bag, or by mixing components of a multi-chamber pails or sets of buckets.

In particular, the silicate-based activator comprising sodium silicate, potassium silicate, lithium silicate, modifications or mixtures thereof component is used in a two-component inorganic mortar system, wherein the inorganic mortar system comprises a curable aqueous-phase aluminous cement component A and an initiator component B in aqueous-phase for initiating the curing process, wherein component A further comprises at least one blocking agent selected from the group consisting of boric acid, phosphoric acid, metaphosphoric acid, phosphorous acid, phosphonic acids, salts and mixtures thereof, at least one plasticizer and water, and component B comprises an accelerator component, at least one retarder, at least one mineral filler and water, to activate component A.

The following example illustrates the invention without thereby limiting it.

### EXAMPLES

### 1. Preparation of component A and component B

The following liquid slurries (cementitious compound A and initiator compound B) of the were produced according to the following procedures:

### 1.1 Component A

19.855 g deionized water, 0.75 g of 85% phosphoric acid (blocking agent), 0.5 g xanthan gum (thickener), 0.6 g Ethacryl G® (superplasticizer), and 0.015 g Nuosept® (biocide) were homogenized at room temperature, and whilst stirring with a dissolver, the calcium aluminate cement (pure Ternal White®) is added in subsequent small portions, to obtain finally a smooth, liquid pasty slurry of the blocked cement in water, the pH value being below 7.

### 1.2 Component B

In 13.95 g of deionized water, 10 g of Geosil 14517 (potassium silicate-based activator, Wöllner GmbH), 0.65 g of Ecodis® P50 (superplasticizer), 0.4 g Optigel® WX (thickener) and 0.43 g Li₂SO₄ (accelerator) were dissolved. Whilst stirring with a dissolver, 74.55 g of a mixture of the following fillers was added in subsequent portions: 35.38 g Edelkorund Qual. V Nr. 70,17.56 g Edelkorund Qual. V F90, 9.76 g Edelkorund Qual. V Nr. 800 and 11.85 g of Omyabrite 1300 X-OM, to obtain finally a smooth, liquid pasty slurry of the fillers in water, the pH value being above 12.

### 2. Determination of the mechanical performance

After the preparation, both components were filled into a plastic hard cartridge consisting of the separate compartments in a ratio of component A:B = 3:1. The hard cartridge was placed into a dispenser and the two masses were then mixed by a static mixer attached to the nozzle of the hard cartridge and injected into boreholes in a concrete plate. The boreholes exhibited a depth of 72 mm and a diameter of 14 mm. The boreholes were cleaned by compressed air cleaning and brushing prior to injection of the mortar. Then, a threaded rod was inserted into each borehole. The pull-out strength was measured after 24 hours, 48 hours and 7 days of curing to measure the ability of the mortar to fix the steel element in the concrete. The results from the pull-out tests are given in Table 1.

**Table 1: Pull-out values in N/mm².**

| Pull-out test | 24h | 48h | 7d |
|---|---|---|---|
| N/mm² | 8.54 | 10.61 | 14.22 |

These results show that the blocked calcium aluminate cement slurry was activated by the addition of a component B comprising a silicate-based activator component and hardens in order to fix a steel element in concrete.

As it has been shown above, the two-component mortar system of the present invention provides curing rates and mechanical strength comparable to those of the organic systems, but the essentially alternative mineral composition thereof makes it far less toxic and very little polluting for the environment as well as allows for a more cost-effective production than of the known system of the prior art. Further, this alternative system addresses positively all economic, ecologically and toxically factors, specifically in view of the climate change and limited earth resources.

## Claims

1. Two-component mortar system comprising a curable aqueous-phase aluminous cement component A and an initiator component B in aqueous-phase for initiating the curing process, component A further comprising at least one blocking agent selected from the group consisting of boric acid, phosphoric acid, metaphosphoric acid, phosphorous acid, phosphonic acids, salts and mixtures thereof, at least one plasticizer and water, and component B comprising an initiator including an activator component and accelerator component, at least one retarder, at least one mineral filler and water, wherein the accelerator component comprises at least one alkali or alkaline earth metal salt, wherein the at least one retarder is selected from the group consisting of citric acid, tartaric acid, lactic acid, salicylic acid, gluconic acid, lignosulfonates, cellulose derivatives, organophosphates or synthetic polymers, maleic anhydride and mixtures thereof, and wherein the at least one mineral filler is selected from the group consisting of limestone fillers, sand, corundum, dolomite; alkaline-resistant glass, crushed stones, gravels, pebbles and mixtures thereof,
**characterized in that**
the activator component comprises sodium silicate, potassium silicate, lithium silicate, modifications or mixtures thereof.

2. Two-component mortar system according to claim 1, **characterized in that** the activator component is an aqueous solution of sodium silicate, potassium silicate, lithium silicate, modifications or mixtures thereof.

3. Two-component mortar system according to claim 1 or 2, **characterized in that** the activator-component comprises 1 to 50 wt.-% of silicate, preferably 10 to 40 wt.-%, most preferably 15 to 30 wt.-%, based on the total weight of the aqueous alkali silicate.

4. Two-component mortar system according to anyone of the preceding claims,
**characterized in that**
the at least one retarder is citric acid, tartaric acid or a mixture thereof.

5. Two-component mortar system according to anyone of the preceding claims,
**characterized in that**
the least one mineral filler has an average particle size of not more than 500 µm.

6. Two-component mortar system according to anyone of the preceding claims,
**characterized in that**
the at least one mineral filler is a limestone filler or a mixture of limestone fillers.

7. Two-component mortar system according to anyone of the preceding claims,
**characterized in that**
component A and component B are in form of a slurry or paste.

8. Two-component mortar system according to anyone of the preceding claims,
**characterized in that**
the two-component mortar system has an initial set time of at least 5 min.

9. Two-component mortar system according to anyone of the preceding claims,
**characterized in that**
the pH-value of component B is above 10.

10. Two-component mortar system according to anyone of the preceding claims,
**characterized in that**
component B comprises
0.1 wt.-% to 15 wt.-% of potassium or sodium silicate,
0.1 wt.-% to 5 wt.-% of lithium sulfate or lithium sulfate monohydrate,
0.05 wt.-% to 5 wt.-% of citric acid,
0.05 wt.-% to 4 wt.-% of tartaric acid,
30 wt.-% to 45 wt.-% of a first mineral filler,
15 wt.-% to 25 wt.-% of a second mineral filler,
5 wt.-% to 20 wt.-% of a third mineral filler,
5 wt.-% to 15 wt.-% of a fourth mineral filler,
0.01 wt.-% to 0.5 wt.-% of a thickening agent, and
15 wt.-% to 25 wt.-% of water.

11. Use of the two-component mortar system as described in anyone of the preceding claims for chemically fastening of anchoring means in mineral substrates.

12. Use according to claim 11, wherein the anchoring means are anchor rods, threaded anchor rods, bolts or steel reinforcement bars.

13. Use according to claim 11 or 12, wherein the mineral substrates are structures made of brickwork, concrete, pervious concrete or natural stone.

14. Use of an activator component comprising sodium silicate, potassium silicate, lithium silicate, modifications or mixtures thereof in a two-component inorganic mortar system, wherein the inorganic mortar system comprises a curable aqueous-phase aluminous cement component A and an initiator component B in aqueous-phase for initiating the curing process, wherein component A further comprises at least one blocking agent selected from the group consisting of boric acid, phosphoric acid, metaphosphoric acid, phosphorous acid, phosphonic acids, salts and mixtures thereof, at least one plasticizer and water, and component B comprises an accelerator component, at least one retarder, at least one mineral filler and water, to activate component A.
